# EUROPEAN PATENT APPLICATION

(11) **EP 4 667 788 A1**
(43) Date of publication of application: **24.12.2025**
(21) Application number: 24756951.0
(22) Date of filing: 15.02.2024
(51) Int. Cl.: F16J 15/10

(54) **SEAL STRUCTURE AND BACKUP MATERIAL**

(30) Priority: 17.02.2023 JP 2023022987
(71) Applicant: VALQUA, Ltd., Shinagawa-ku Tokyo 141-6024 (JP)
(72) Inventor: MINAMI, Mitsuru, Gojo-shi, Nara 637-0014 (JP); YOSHIMOTO, Yuuichirou, Gojo-shi, Nara 637-0014 (JP); UEDA, Akira, Gojo-shi, Nara 637-0014 (JP)
(74) Representative: Vossius & Partner Patentanwälte Rechtsanwälte mbB
(86) International application number: PCT/JP2024/005266
(87) International publication number: WO 2024/172111

(57) **Abstract**

A seal structure, wherein a seal groove (1G) has: a high-pressure side groove bottom (1Ga) on the high-pressure side at a certain distance from the second seal surface (2a); and a low-pressure side groove bottom (1Gb) continuing the high-pressure side groove bottom (1Ga) on the low-pressure side, wherein the low-pressure side groove bottom (1Gb) becomes closer to a second seal surface (2a) in a direction from the high-pressure side groove bottom (1Ga) toward the low-pressure side, wherein a sealing member (10) is disposed between the high-pressure side groove bottom (1Ga) and the second seal surface (2a), a backup member (20) is disposed between the low-pressure side groove bottom (1Gb) and the second seal surface (2a), and the backup member (20) has an abutment surface (20c) on a side opposite the low-pressure side groove bottom (1Gb), the abutment surface (20c) having a shape along the low-pressure side groove bottom (1Gb).

## Description

### TECHNICAL FIELD

The present invention relates to a seal structure and a backup member.

### BACKGROUND ART

Examples of techniques disclosing seal structures for gas (such as high-pressure hydrogen), as examples of a sealed structure, include those disclosed in WO2004/061353 (PTL 1), Japanese Patent No. 4636281 (PTL 2), Japanese Patent No. 4949492 (PTL 3), and Japanese Patent No. 5126462 (PTL 4).

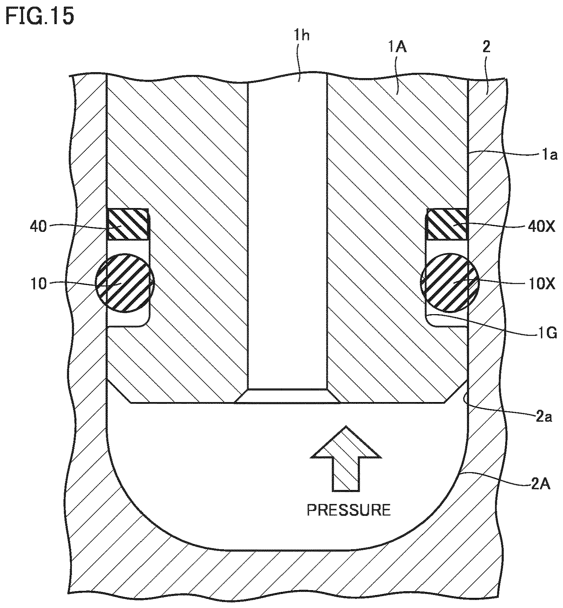

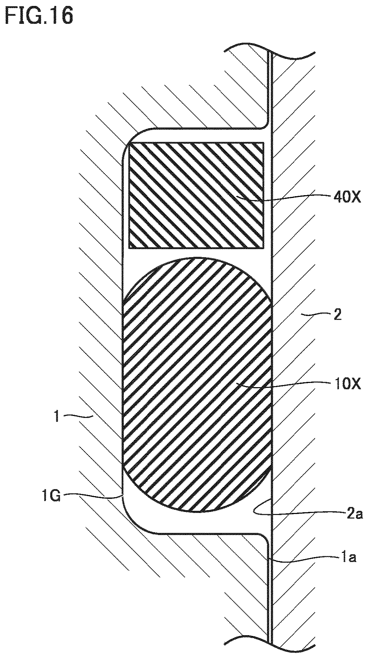

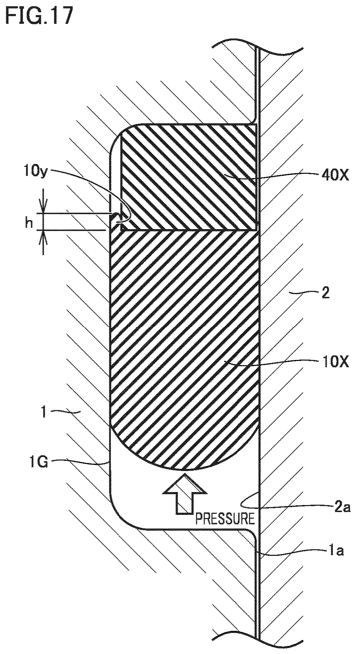

Here, referring to Figs. 15 and 17, as an example of a seal structure, a structure is described in which an O-ring for sealing is disposed on the high-pressure side of a seal groove and a backup ring is disposed on the low-pressure side of the seal groove. Fig. 15 is an enlarged cross-sectional view of a conventional seal structure (prior to a high-pressure operation). Fig. 16 is an enlarged cross-sectional view of the conventional seal structure (after a high-pressure operation). Fig. 17 is an enlarged cross-sectional view showing a problem with the conventional seal structure (after a high-pressure operation).

Referring to Fig. 15, a cylindrical shaft 1A is accommodated in a cylindrical groove 2A. Shaft 1A has an outer circumferential surface configuring a first seal surface 1a. Cylindrical groove 2A has an inner circumferential surface configuring a second seal surface 2a. As a gas is sent into cylindrical groove 2A through a through-hole 1h in shaft 1A, the interior of cylindrical groove 2A is brought into under high pressure.

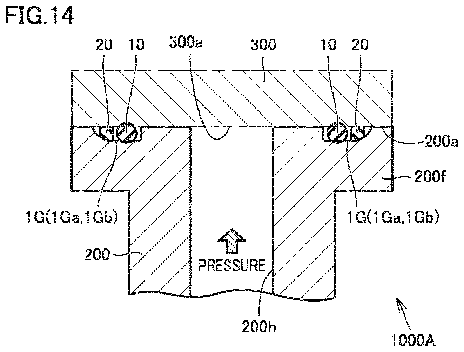

The outer circumferential surface of shaft 1A has an annular seal groove 1G receding inwardly from first seal surface 1a. In seal groove 1G, an O-ring 10X for sealing is disposed on the high-pressure side and a backup ring 40X, supporting O-ring 10X, is disposed on the low-pressure side. O-ring 10X and backup ring 40X are shown not deformed in a cross-sectional view of Fig. 14.

Referring to Fig. 16, O-ring 10X and backup ring 40X are shown accommodated in seal groove 1G. In this state, O-ring 10X is tucked between a bottom 1Gs of seal groove 1G and second seal surface 2a and deformed in an oval shape. Since the pressure of the gas is not applied to O-ring 10X from the high-pressure side (the lower side in the figure), O-ring 10X is not moved to the backup ring 40X side.

Referring to Fig. 17, O-ring 10X having the pressure of the gas applied from the high-pressure side (the lower side in the figure) is shown. As a high pressure is applied to O-ring 10X, O-ring 10X is moved to the backup ring 40X side, as shown in the figure. At this time, backup ring 40X suppresses the movement of O-ring 10X from the low-pressure side (the upper side in the figure), and a seal structure partitioning the high-pressure side and the low-pressure side by O-ring 10X is thereby maintained.

### CITATION LIST

### PATENT LITERATURE

PTL 1: WO2004/061353
PTL 2: Japanese Patent No. 4636281
PTL 3: Japanese Patent No. 4949492
PTL 4: Japanese Patent No. 5126462

### SUMMARY OF INVENTION

### TECHNICAL PROBLEM

Referring to Fig. 17, according to the conventional seal structure, the application of a high pressure to O-ring 10X presses O-ring 10X against the backup ring 40X. Backup ring 40X is made of a material harder than O-ring 10X, and if the application of the pressure to O-ring 10X continues, a portion of O-ring 10X enters a gap h between backup ring 40X and bottom 1Gs of seal groove 1G, resulting in formation of a deformed area 10y in gap h.

The formation of such a deformed area 10y of O-ring 10X may cause a breakage such as cracks in O-ring 10X, starting from the deformed area 10y.

The present invention is made to solve the above problem and an object of the present invention is to provide a seal structure, configured of a sealing member and a backup member, and the backup member, which suppress a damage such as cracks to the sealing member from occurring upon application of a high pressure to the sealing member in the seal structure.

### SOLUTION TO PROBLEM

[1]: A seal structure according to the present disclosure is a seal structure for partitioning a high-pressure side and a low-pressure side, the seal structure, as viewed in a vertical cross section, including: one member having a first seal surface; a seal groove formed in the first seal surface; a sealing member attached in the seal groove and disposed on the high-pressure side; a backup member attached in the seal groove and disposed on the low-pressure side; and the other member disposed opposite the one member and having a second seal surface abutting the sealing member, the seal structure having the following configurations:
   The seal groove has: a high-pressure side groove bottom on the high-pressure side at a certain distance from the second seal surface; and a low-pressure side groove bottom continuing the high-pressure side groove bottom on the low-pressure side, wherein the low-pressure side groove bottom becomes closer to the second seal surface in a direction from the high-pressure side groove bottom toward the low-pressure side, wherein the sealing member is disposed between the high-pressure side groove bottom and the second seal surface, the backup member is disposed between the low-pressure side groove bottom and the second seal surface, and the backup member has an abutment surface on a side opposite the low-pressure side groove bottom, the abutment surface having a shape along the low-pressure side groove bottom.
[2]: The seal structure according to [1], wherein the backup member has a slope surface inclined away from the second seal surface in a direction toward the low-pressure side.
[3]: The seal structure according to [1] or [2], wherein the low-pressure side groove bottom has an arc shape.
[4]: The seal structure according to any one of [1] to [3], wherein the first seal surface is an outer circumferential surface of a cylindrical member, the second seal surface is a bottomed cylindrical inner circumferential surface of a housing accommodating the cylindrical member, the bottomed cylindrical inner circumferential surface being in contact with the first seal surface, the seal groove is an annular groove formed in the outer circumferential surface of the cylindrical member, and the sealing member and the backup member have annular shapes.
[5]: A backup member according to the present disclosure is a backup member having an annular shape, which is disposed, together with a sealing member, in a seal groove of a seal structure for partitioning a high-pressure side and a low-pressure side, the backup member, as viewed in a vertical cross section, including: a first surface; a second surface extending upward from a radially outer end of the first surface; a third surface opposite the second surface and extending upward from a radially inner end of the first surface; and a fourth surface opposite the first surface and coupling the second surface and the third surface, wherein the third surface is inclined in such a manner that the third surface becomes closer to the second surface in a direction toward the fourth surface.
[6]: The backup member according to [5], wherein the third surface includes an inwardly bulging curved portion.
[7]: The backup member according to any one of [5] or [6], wherein the second surface is inclined in such a manner that the second surface becomes closer to the third surface in a direction toward the fourth surface.

### ADVANTAGEOUS EFFECTS OF INVENTION

According to the seal structure and the backup member, the seal structure, configured of the sealing member and the backup member, and the backup member can be provided which suppress a damage such as cracks to the sealing member from occurring upon application of a high pressure to the sealing member in the seal structure.

### BRIEF DESCRIPTION OF DRAWINGS

Fig. 1 is a cross-sectional view of a sealed structure according to Embodiment 1.
Fig. 2 is an enlarged partial cross-sectional view of a seal structure according to Embodiment 1.
Fig. 3 is an enlarged partial cross-sectional view of a seal groove employed in the seal structure according to Embodiment 1.
Fig. 4 is a plan view of a backup ring according to Embodiment 1.
Fig. 5 is a cross-sectional arrow view of the backup ring, taken along a V-V line of Fig. 4.
Fig. 6 is an enlarged partial cross-sectional view of the seal structure according to Embodiment 1 in a sealed state.
Fig. 7 is a schematic diagram showing changes in sealed state of the seal structure according to Embodiment 1.
Fig. 8 is a plan view of a backup ring according to Embodiment 2.
Fig. 9 is a cross-sectional arrow view of the backup ring, taken along an IX-IX line of Fig. 8.
Fig. 10 is a plan view of a backup ring according to Embodiment 3.
Fig. 11 is a cross-sectional arrow view of the backup ring, taken along an XI-XI line of Fig. 10.
Fig. 12 is a plan view of a backup ring according to Embodiment 4.
Fig. 13 is a cross-sectional arrow view of the backup ring, taken along a XIII-XIII line of Fig. 10.
Fig. 14 is a cross-sectional view of a sealed structure according to Embodiment 5.
Fig. 15 is an enlarged cross-sectional view of a conventional seal structure (prior to a high-pressure operation).
Fig. 16 is an enlarged cross-sectional view of the conventional seal structure (after the high-pressure operation).
Fig. 17 is an enlarged cross-sectional view showing a problem with the conventional seal structure (after the high-pressure operation).

### DESCRIPTION OF EMBODIMENTS

A seal structure according to respective embodiments will be described, with reference to the accompanying drawings. In the embodiments described below, when referring to a number, a quantity, etc., the scope of the present invention is not always limited to that number, that quantity, etc., unless otherwise specified. Like reference number refers to like parts and corresponding parts, and no redundant descriptions may be repeated. In the description below, for convenience of illustration, the terms upper or lower are used to manifest positional relationships, which, however, does not exclude any configurations where a top-bottom arrangement is arranged upside down or left and right.

### (Embodiment 1)

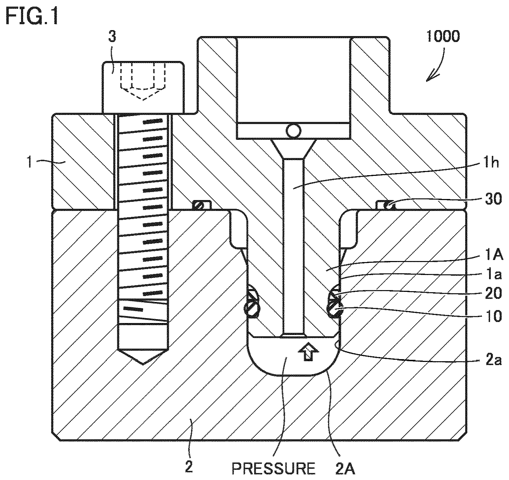

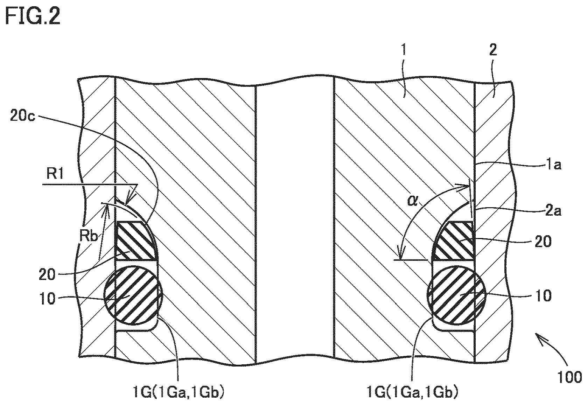

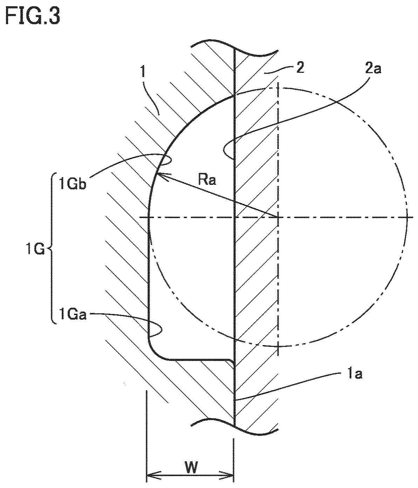

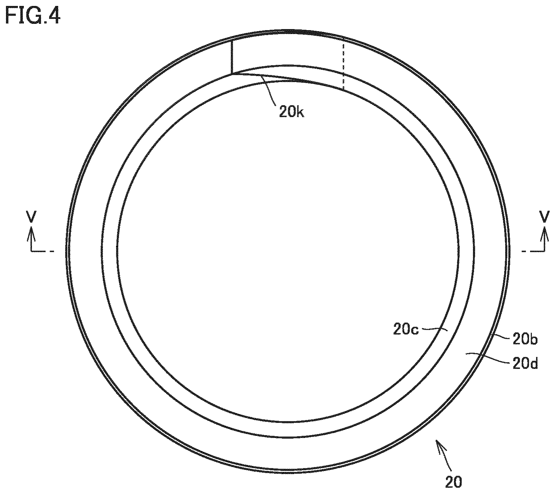

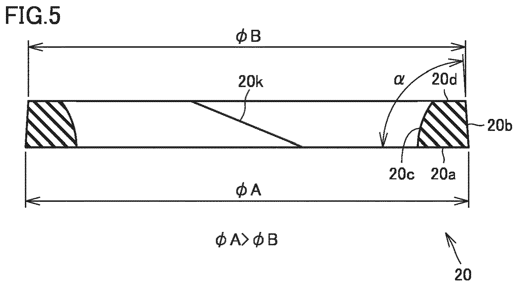

Referring to Figs. 1 and 5, a seal structure according to the present embodiment is now described. Fig. 1 is a cross-sectional view of a sealed structure 1000 employing a seal structure 100. Fig. 2 is an enlarged partial cross-sectional view of seal structure 100. Fig. 3 is an enlarged partial cross-sectional view of a seal groove employed in seal structure 100. Fig. 4 is a plan view of a backup ring. Fig. 5 is a cross-sectional arrow view of the backup ring, taken along a V-V line of Fig. 4.

### (Sealed Structure 1000)

Referring to Fig. 1, the structure of sealed structure 1000 according to the present embodiment employs a seal structure for gas (such as high-pressure hydrogen), and has a header 1 and a housing 2. Header 1 includes a cylindrical shaft 1A extending to the housing 2 side. A through-hole 1h, into which a gas is sent, is formed at the center of shaft 1A.

Housing 2 has a bottomed cylindrical groove 2A accommodating shaft 1A. The outer circumferential surface of shaft 1A configures a first seal surface 1a of one member. The inner circumferential surface of cylindrical groove 2A configures a second seal surface 2a of the other member. As a gas is sent into cylindrical groove 2A through through-hole 1h in shaft 1A, the interior of cylindrical groove 2A is brought into under high pressure.

Header 1 and housing 2 are fastened by bolts 3 via an O-ring 30. This keeps the airtightness of seal structure 100 described below.

### (Seal Structure 100)

Referring to Fig. 2, seal structure 100 is now described in detail. An annular seal groove 1G is formed in the outer circumferential surface of shaft 1A, receding inwardly from first seal surface 1a. A seal ring, in the present embodiment, O-ring 10 is disposed as a sealing member on the high-pressure side in seal groove 1G. A backup ring 20 is disposed as a backup member on the low-pressure side in seal groove 1G. O-ring 10 and backup ring 20 are shown not deformed in the cross-sectional view of Fig. 2.

The cross-sectional shape of O-ring 10 is a generally circular shape. A commercial O-ring can be used. Note that a sealing member for securing purposes such as a u-cup seal may be used as the seal ring, instead of a commercial O-ring. A material harder than O-ring 10 and softer than shaft 1A , such as PTFE (polytetrafluorethylene), POM (polyoxymethylene), or PEEK (polyetheretherketone), may be used as a material of backup ring 20. Details of the cross-sectional shape of backup ring 20 and functions of seal structure 100 will be described below.

### (Cross-Sectional Shape of Seal Groove 1G)

Referring to Fig. 3, a cross-sectional shape of seal groove 1G is now described. The cross section of Fig. 3 is of one groove as viewed in a vertical cross section cutting shaft 1A in a plane including the axis when the axial direction of shaft 1A is the vertical direction.

Seal groove 1G has a high-pressure side groove bottom 1Ga, on the high-pressure side, located a certain distance apart from second seal surface 2a, and a low-pressure side groove bottom 1Gb, on the low-pressure side, which continues high-pressure side groove bottom 1Ga and becomes closer to second seal surface 2a in a direction from high-pressure side groove bottom 1Ga toward the low-pressure side. The low-pressure side end of low-pressure side groove bottom 1Gb intersects with first seal surface 1a.

Low-pressure side groove bottom 1Gb has an arc shape having a radius Ra. Radius Ra may satisfy Ra > W, where W is the depth of high-pressure side groove bottom 1Ga.

### (Shape of Backup Ring 20)

Referring to Figs. 4 and 5, an overall shape and a cross-sectional shape of backup ring 20 are now described. Backup ring 20 has an annular shape. Backup ring 20 has a cut face 20k for attaching backup ring 20 to seal groove 1G of the cylindrical shaft 1A.

The vertical cross-sectional shape of backup ring 20 is a generally rectangular shape having a bottom surface 20a on the high-pressure side (the O-ring 10 side), a side surface 20b on the second seal surface 2a side, an abutment surface 20c having a shape along low-pressure side groove bottom 1Gb on a side opposite the low-pressure side groove bottom 1Gb, and an upper surface 20d on the low-pressure side.

As described below, the shape of abutment surface 20c along low-pressure side groove bottom 1Gb encompasses a situation where a slight gap is caused between abutment surface 20c and low-pressure side groove bottom 1Gb. When radius Ra of low-pressure side groove bottom 1Gb of Fig. 3 is R 2.6 mm, a radius Rb of abutment surface 20c is R 2.4 mm.

Bottom surface 20a corresponds to a first surface, and side surface 20b corresponds to a second surface extending upward from the radially outer end of bottom surface 20a. Abutment surface 20c corresponds to a third surface extending upward from the radially inner end of bottom surface 20a and opposite the side surface 20b. Upper surface 20d corresponds to a fourth surface coupling side surface 20b and abutment surface 20c and opposite the bottom surface 20a. Abutment surface 20c is inclined in such a manner that the abutment surface 20c becomes closer to side surface 20b in a direction toward upper surface 20d. Specifically, abutment surface 20c includes an inwardly bulging curved portion.

According to backup ring 20 of the present embodiment, side surface 20b, located on the second seal surface 2a side, is inclined radially inward from bottom surface 20a toward upper surface 20d. Specifically, side surface 20b is inclined in such a manner that the side surface 20b becomes closer to abutment surface 20c in a direction toward upper surface 20d.

In the present embodiment, an angle (α) formed between second seal surface 2a and side surface 20b is approximately 85 degrees. Consequently, a diameter φA of backup ring 20 on the bottom surface 20a side and a diameter φB of backup ring 20 on the upper surface 20d side have a relationship satisfying diameter φA > diameter φB.

### (Function of Seal Structure 100)

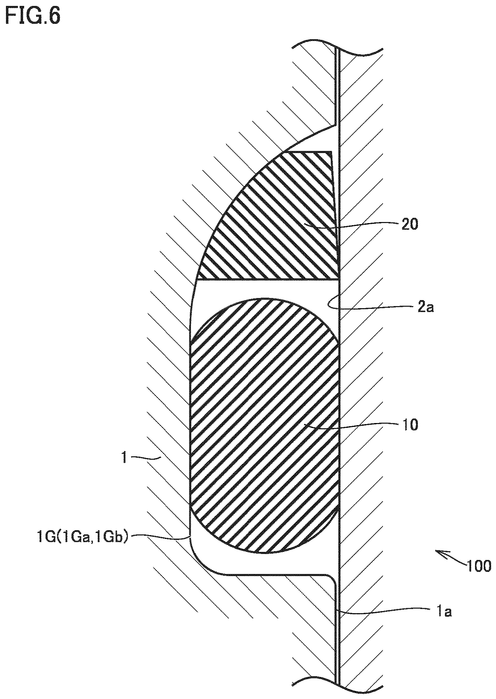

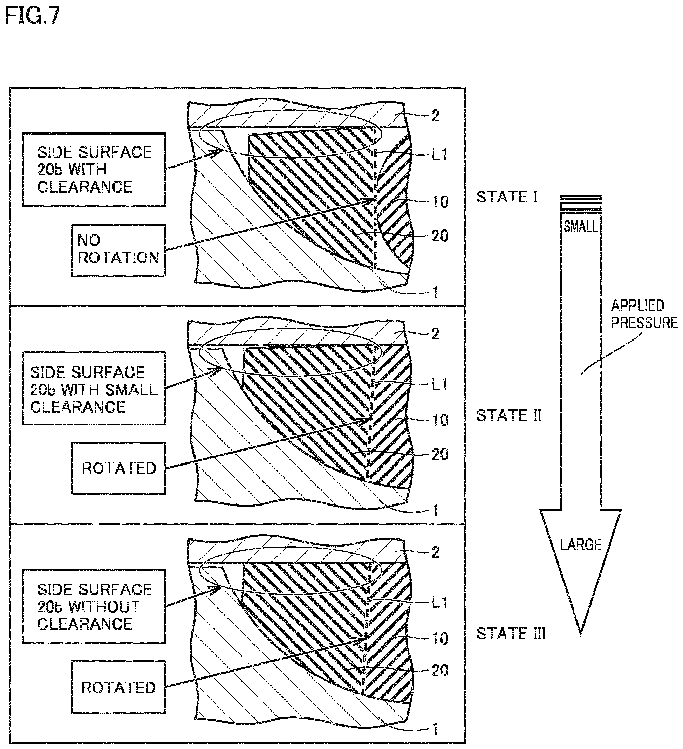

Next, referring to Figs. 6 and 7, a function of seal structure 100 is described. Fig. 6 is an enlarged cross-sectional view of seal structure 100 in a sealed state. Fig. 7 is a schematic diagram showing changes in sealed state of seal structure 100.

Referring to Fig. 6, O-ring 10 and backup ring 20 are shown accommodated in seal groove 1G. In this state, O-ring 10 is tucked between bottom 1Gs of seal groove 1G and second seal surface 2a and deformed in an oval shape. Since the pressure of gas is not applied to O-ring 10 from the high-pressure side (the lower side in the figure), O-ring 10 is not moved to the backup ring 20 side.

Referring to Fig. 7, a state I, a state II, and a state III indicate gradual increasing states of pressure of the gas in O-ring 10X. State I is the same as the state illustrated in Fig. 6. State III is where the pressure applied to backup ring 20 is the highest.

In state I, a large pressure is not applied from O-ring 10 to backup ring 20. Therefore, there is clearance between side surface 20b and first seal surface 1a, and a line L1 of bottom surface 20a is not moved (rotated).

In state II, application of a pressure from O-ring 10 to backup ring 20 begins. Therefore, due to the shape of abutment surface 20c being along low-pressure side groove bottom 1Gb, backup ring 20 starts moving (rotating) along low-pressure side groove bottom 1Gb. Consequently, the clearance between side surface 20b and first seal surface 1a reduces, resulting in line L1 of bottom surface 20a moving (clockwise) as shown in the figure.

In state III, a further pressure is applied from O-ring 10X to backup ring 20. Therefore, backup ring 20 further moves (clockwise) along low-pressure side groove bottom 1Gb. Consequently, the clearance between side surface 20b and first seal surface 1a disappears, resulting in further movement (clockwise) of line L1 of bottom surface 20a.

In this manner, as a pressure is applied from O-ring 10 to backup ring 20, backup ring 20 moves (rotates) along low-pressure side groove bottom 1Gb. Consequently, the gap as shown in the conventional structure is not caused between backup ring 20 and low-pressure side groove bottom 1Gb, causing no deformed area in backup ring 20. Consequently, a damage to backup ring 20 can be suppressed from occurring.

As described above, according to the present embodiment, since the low-pressure side bottom (low-pressure side groove bottom 1Gb) of seal groove 1G, accommodating backup ring 20, is formed in an R shape, and abutment surface 20c of backup ring 20 opposite the bottom of seal groove 1G is formed in a shape along low-pressure side groove bottom 1Gb, no gap is caused between backup ring 20 and seal groove 1G. Consequently, deformation of O-ring 10 can be suppressed even when a high pressure is applied to O-ring 10.

In the respective embodiments below, other embodiments of the cross-sectional shape of the backup ring are described.

### (Embodiment 2: Backup Ring 20A)

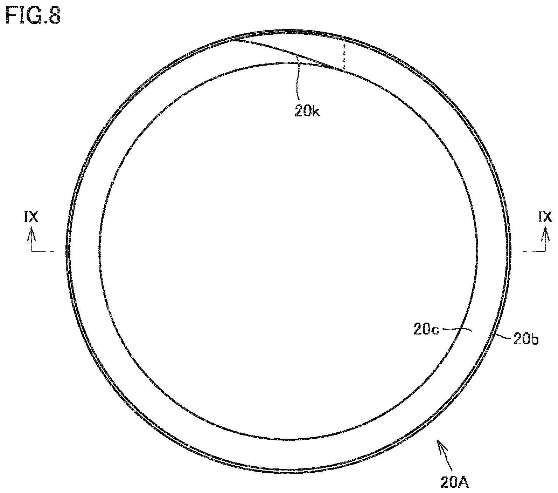

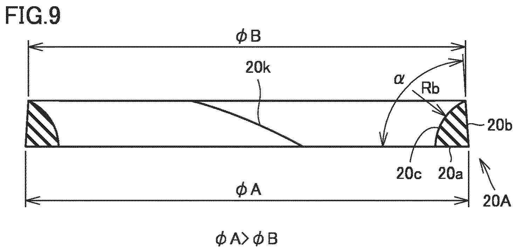

Referring to Figs. 8 and 9, another embodiment of the overall shape and cross-sectional shape of a backup ring 20A is described. Fig. 8 is a plan view of backup ring 20A. Fig. 9 is a cross-sectional arrow view of backup ring 20A, taken along an IX-IX line of Fig. 8. Since the basic configuration is the same as that of backup ring 20 described above, only the differences will be described below.

While backup ring 20, as viewed in the cross section, has a generally rectangular shape having bottom surface 20a, side surface 20b, abutment surface 20c, and upper surface 20d, backup ring 20A has a generally triangle shape, without upper surface 20d, in which the curved abutment surface 20c intersects with side surface 20b.

Backup ring 20A having such a cross-sectional shape can yield the same advantageous effects as backup ring 20 described above.

### (Embodiment 3: Backup Ring 20B)

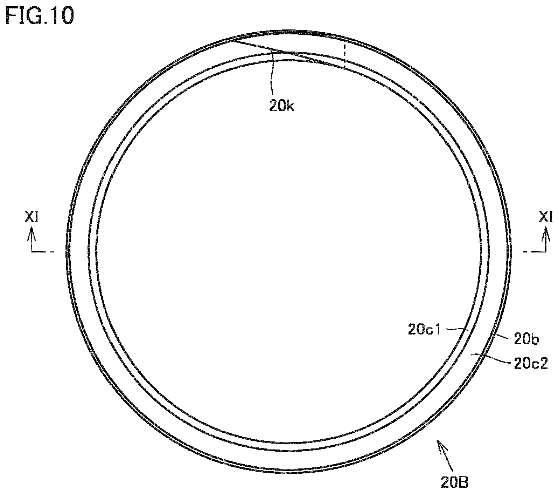

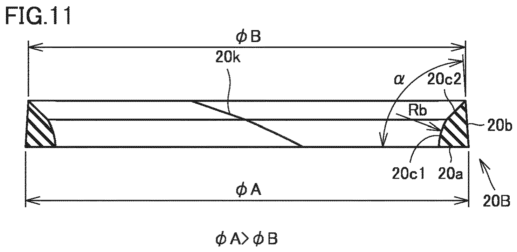

Referring to Figs. 10 and 11, still another embodiment of the overall shape and cross-sectional shape of a backup ring 20B is described. Fig. 10 is a plan view of backup ring 20B. Fig. 11 is a cross-sectional arrow view of backup ring 20B, taken along an XI-XI line of Fig. 10. Since the basic configuration is the same as that of backup ring 20A described above, only the differences will be described below.

While backup ring 20A has the curved abutment surface 20c intersecting with side surface 20b, abutment surface 20c according to the present embodiment has a curved portion 20c1 on the high-pressure side and a linear portion 20c2 on the low-pressure side.

Even with this configuration, the curved portion 20c1 is able to move (rotate) along low-pressure side groove bottom 1Gb, thereby yielding the same advantageous effects as backup ring 20A.

### (Embodiment 4: Backup Ring 20C)

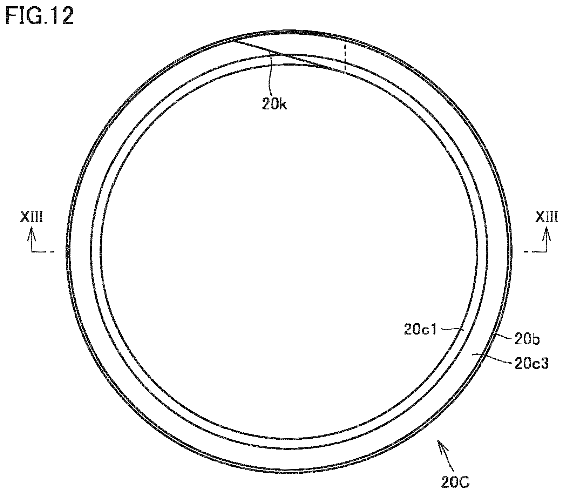

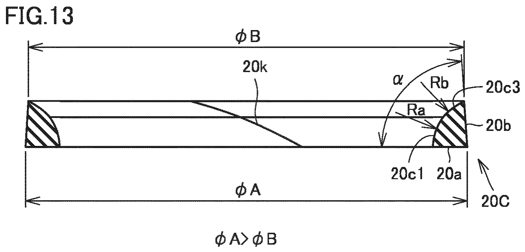

Referring to Figs. 12 and 13, still another embodiment of the overall shape and cross-sectional shape of a backup ring 20C is described. Fig. 12 is a plan view of backup ring 20C. Fig. 13 is a cross-sectional arrow view of backup ring 20C, taken along a XIII-XIII line of Fig. 12. Since the basic configuration is the same as that of backup ring 20A described above, only the differences will be described below.

An abutment surface 20c of backup ring 20C according to the present embodiment has a curved portion 20c1 (a radius Ra) and a curved portion 20c3 (a radius Rb), which have different curvatures.

Even with this configuration, abutment surface 20c is able to move (rotate) along low-pressure side groove bottom 1Gb, thereby yielding the same advantageous effects as backup ring 20A.

In the respective embodiments above, seal groove 1G is formed in shaft 1A and the sealing member and the backup member are disposed in seal groove 1G.
However, for example, if the above seal structure is employed between a slidable rod and a housing, a seal groove may be formed on the housing side.

### (Embodiment 5: Sealed Structure 1000A)

Referring to Fig. 14, a description is provided in which the seal structure 100 is applied to a sealed structure 1000A different from sealed structure 1000 described above. Fig. 14 is a cross-sectional view of sealed structure 1000A. O-ring 10 and backup ring 20 are shown not deformed in the cross-sectional view of Fig. 14.

In sealed structure 1000A, an annular seal groove 1G is formed in a flat surface of an annular flange 200f of a housing 200 having a channel 200h in the center. The flat surface of the annular flange 200f configures a first seal surface 200a, and the lower surface of a plate 300 configures a second seal surface 300a. Plate 300 is secured to an annular flange 200f at a position not shown.

Channel 200h is on the high-pressure side. Thus, seal groove 1G has a high-pressure side groove bottom 1Ga on the channel 200h side, and a low-pressure side groove bottom 1Gb on the outer side of high-pressure side groove bottom 1Ga. O-ring 10 is disposed on the channel 200h side, and backup ring 20 is disposed on the outer side of O-ring 10. Backup ring 20 may have the same shape as backup ring 20A, backup ring 20B, and backup ring 20C according to Embodiments 2 to 4.

Sealed structure 1000A according to the present embodiment also yields the same advantageous effects as sealed structure 1000 according to Embodiment 1 described above.

The presently disclosed embodiments should be considered in all aspects as illustrative and not restrictive. The scope of the present invention is indicated by the appended claims, rather than by the description above, and all changes that come within the scope of the claims and the meaning and range of equivalency of the claims are intended to be embraced within their scope.

### REFERENCE SIGNS LIST

1 header; 1A shaft; 1G seal groove; 1Ga high-pressure side groove bottom; 1Gb low-pressure side groove bottom; 1Gs, 20a bottom surface; 1a, 200a first seal surface; 1h through-hole; 2, 200 housing; 2A cylindrical groove; 2a, 300a second seal surface; 3 bolt; 10, 10X, 30 O-ring; 10y deformed area; 20, 20A, 20B, 20C, 40X backup ring; 20b side surface; 20c abutment surface; 20c1, 20c3 curved portion; 20c2 linear portion; 20d upper surface; 20k cut face; 50, 300 plate; 200h channel; 200f annular flange; 100 seal structure; 200h channel; and 1000, 1000A sealed structure.

## Claims

1. A seal structure for partitioning a high-pressure side and a low-pressure side, the seal structure, as viewed in a vertical cross section, comprising:
one member having a first seal surface;
a seal groove formed in the first seal surface;
a sealing member attached in the seal groove and disposed on the high-pressure side;
a backup member attached in the seal groove and disposed on the low-pressure side; and
the other member disposed opposite the one member and having a second seal surface abutting the sealing member, wherein
the seal groove has:
a high-pressure side groove bottom on the high-pressure side at a certain distance from the second seal surface; and
a low-pressure side groove bottom continuing the high-pressure side groove bottom on the low-pressure side, wherein the low-pressure side groove bottom becomes closer to the second seal surface in a direction from the high-pressure side groove bottom toward the low-pressure side, wherein
the sealing member is disposed between the high-pressure side groove bottom and the second seal surface,
the backup member is disposed between the low-pressure side groove bottom and the second seal surface, and
the backup member has an abutment surface on a side opposite the low-pressure side groove bottom, the abutment surface having a shape along the low-pressure side groove bottom.

2. The seal structure according to claim 1, wherein
the backup member has a slope surface inclined away from the second seal surface in a direction toward the low-pressure side.

3. The seal structure according to claim 1, wherein
the low-pressure side groove bottom has an arc shape.

4. The seal structure according to claim 1, wherein
the first seal surface is an outer circumferential surface of a cylindrical member,
the second seal surface is a bottomed cylindrical inner circumferential surface of a housing accommodating the cylindrical member, the bottomed cylindrical inner circumferential surface being in contact with the first seal surface,
the seal groove is an annular groove formed in the outer circumferential surface of the cylindrical member, and
the sealing member and the backup member have annular shapes.

5. A backup member having an annular shape, which is disposed, together with a sealing member, in a seal groove of a seal structure for partitioning a high-pressure side and a low-pressure side, the backup member, as viewed in a vertical cross section, comprising:
a first surface;
a second surface extending upward from a radially outer end of the first surface;
a third surface opposite the second surface and extending upward from a radially inner end of the first surface; and
a fourth surface opposite the first surface and coupling the second surface and the third surface, wherein
the third surface is inclined in such a manner that the third surface becomes closer to the second surface in a direction toward the fourth surface.

6. The backup member according to claim 5, wherein
the third surface includes an inwardly bulging curved portion.

7. The backup member according to claim 5, wherein
the second surface is inclined in such a manner that the second surface becomes closer to the third surface in a direction toward the fourth surface.
